# EUROPÄISCHE PATENTANMELDUNG

(11) **EP 1 306 494 A2**
(43) Veröffentlichungstag der Anmeldung: **02.05.2003**
(21) Anmeldenummer: 02021103.3
(22) Anmeldetag: 23.09.2002
(51) Int. Cl.: E03F 1/00, G05D 9/02

(54) **Ventil, insbesondere Spülventil**

(30) Priorität: 26.10.2001 DE 10152445; 20.03.2002 DE 10212506
(71) Anmelder: Kunze, Dieter, c/o Anke Heeschen, 24644 Loop (DE); Reinhardt, Manfred, 23744 Schönwalde (DE)
(72) Erfinder: Kunze, Dieter, c/o Anke Heeschen, 24644 Loop (DE); Reinhardt, Manfred, 23744 Schönwalde (DE)
(74) Vertreter: Harwardt, Günther, Dipl.-Ing.

(57) **Zusammenfassung**

Die Erfindung betrifft ein Ventil 3 zum stoßweisen Ablassen von Flüssigkeit aus einem Reservoir, das bei einem ersten Flüssigkeitsniveau N1 eine erste Schaltposition einnimmt, in der es die Flüssigkeit zurückhält und bei einem höheren zweiten Flüssigkeitsniveau N2 selbsttätig eine zweite Schaltposition einnimmt, in der es auf Durchlass der Flüssigkeit geschaltet ist, umfassend ein Leitrohr 17, das um eine erste Schwenkachse 15 schwenkbar angeordnet ist. Das Leitrohr 17 weist einen ersten Rohrabschnitt 18 mit der Einlassöffnung 19 und einen zum ersten Rohrabschnitt 18 abgebogenen zweiten Rohrabschnitt 20 mit der Auslassöffnung 21 auf, wobei die Einlassöffnung 19 in der zweiten Schaltposition mit ihrem Umfang das erste Flüssigkeitsniveau N1 berührt und in der ersten Schaltposition die Lage der Auslassöffnung 21 die Höhe des zweiten Flüssigkeitsniveaus N2 bestimmt und die Einlassöffnung 19 unterhalb des ersten Flüssigkeitsniveaus N1 liegt, und Steuermittel, die das Leitrohr 17 zur Einnahme der ersten Schaltposition veranlassen.

## Beschreibung

Die Erfindung betrifft ein Ventil, insbesondere Spülventil zum stoßweisen Ablassen von Flüssigkeit aus einem Reservoir.

Für das stoßweise Ablassen von Flüssigkeit aus einer Klärgrube in einen Verteilerschacht zum Einleiten in Verrieselungsstränge einer Untergrundverrieselung werden beispielsweise hydraulische Heber eingesetzt, wobei Abwasser in einem Sammelraumschacht es bis zum Füllstand des Hebers gesammelt wird. Sobald durch eine weitere Einleitung von Wasser der Querschnitt des rohrförmigen Hebers gefüllt ist, entleert sich der Sammelraum bis zu dem in das Flüssigkeitsreservoir eintauchenden Rohrende. Ferner ist es bekannt, Kippgefäße zu nutzen, die sich nach Erreichen eines bestimmten Gewichtes durch Abkippen um eine Schwenkachse entleeren. Des weiteren ist es auch bekannt, die stoßweise Entleerung durch eine Pumpe vorzunehmen, nach dem eine bestimmte Füllhöhe erreicht ist.

Allen mit elektrisch betriebenen Pumpen arbeitenden Systemen oder aber auch mit elektrischen Schaltungen versehenen Systemen ist gemeinsam, dass hohe Kosten gegeben sind. Bei den sonstigen hydraulisch arbeitenden Hebern ist von Nachteil, dass sie einen relativ großen Höhenabstand zwischen dem Zulauf und dem Ablauf benötigen, weil beispielsweise dann, wenn ein Kippgefäß gewählt wird, dies die für den Spülvorgang erforderliche Flüssigkeitsmenge aufnehmen muss.

Die US 4 321 948 zeigt ein Schaltventil, welches zwei Rohrabschnitte aufweist, die zueinander verschwenkbar angeordnet sind. Der erste Rohrabschnitt ist waagerecht angeordnet, wobei der Rohrabschnitt in einer ersten Schaltposition nach oben weist und in einer zweiten Schaltposition nach unten weist. Die beiden Rohrabschnitte sind über einen Faltenbalk miteinander verbunden. Für die verschwenkbare Anordnung weisen beide Rohrabschnitte jeweils zwei Laschen auf, die mit der jeweilig anderen Lasche des anderen Rohrabschnitts über ein Gelenk miteinander verbunden sind. Eine Lasche des zweiten Rohrabschnitts ist in Richtung zum ersten Rohrabschnitt verlängert ausgeführt, wobei ein Gewicht an dessen Ende angeordnet ist. Der wirksame Hebelarm des Gewichts ist in der ersten Schaltposition am größten und nimmt zur zweiten Schaltposition hin ab. Hierdurch wird ein stoßweises Schalten ermöglicht, sobald das Wasser im zweiten Rohrabschnitt ein größeres Drehmoment erzeugt, als das Gewicht. Nachteilig wirkt sich jedoch aus, dass zwischen den Rohrabschnitten ein Faltenbalk vorgesehen ist, der die Strömungsverhältnisse in dem Ventil negativ beeinflusst. Ferner ist die Schalthöhe zwischen demjenigen Flüssigkeitsniveau, bei dem der zweite Rohrabschnitt in seine zweite Schaltposition überführt wird, und demjenigen Flüssigkeitsniveau, bei dem der zweite Rohrabschnitt wieder in seine erste Schaltposition überführt wird, abhängig von dem Durchmesser des ersten Rohrabschnitts. Ein Heben des Wassers ist nicht möglich.

Der Erfindung liegt die Aufgabe zugrunde, ein Ventil, insbesondere Spülventil, vorzuschlagen, welches auch für sedimenthaltige Flüssigkeiten gute Strömungseigenschaften aufweist.

Gelöst wird diese Aufgabe erfindungsgemäß durch ein Ventil, insbesondere Spülventil, zum stoßweisen Ablassen von Flüssigkeit aus einem Reservoir, das bei einem ersten Flüssigkeitsniveau im Reservoir eine erste Schaltposition selbsttätig einnimmt, in der es die Flüssigkeit zurückhält und bei einem vorbestimmten zweiten Flüssigkeitsniveau, das höher ist als das erste Flüssigkeitsniveau, selbsttätig eine zweite Schaltposition einnimmt, in der es auf Durchlass der Flüssigkeit geschaltet ist, umfassend
- ein Leitrohr,
   das eine Einlassöffnung und eine Auslassöffnung aufweist,
   das zwischen der Einlassöffnung und der Auslassöffnung in einem Schwenklager um eine erste Schwenkachse schwenkbar gelagert ist,
   das einen ersten Rohrabschnitt, der die Einlassöffnung besitzt, und einen zweiten Rohrabschnitt, der die Auslassöffnung besitzt, aufweist,
   wobei der erste Rohrabschnitt zum zweiten Rohrabschnitt so abgebogen ist, dass die Einlassöffnung in der zweiten Schaltposition des Leitrohres mit ihrem Umfang das erste Flüssigkeitsniveau berührt und in der ersten Schaltposition die Lage der Auslassöffnung die Höhe des zweiten Flüssigkeitsniveaus bestimmt und die Einlassöffnung unterhalb des ersten Flüssigkeitsniveaus liegt, und
- Steuermittel,
   die das Leitrohr zur Einnahme der ersten Schaltposition mit einem ersten Drehmoment um die erste Schwenkachse veranlassen, das kleiner ist als das durch die Schwerkraft der in dem zweiten Rohrabschnitt in der ersten Schaltposition aufnehmbaren Flüssigkeitsmenge um die Schwenkachse erzeugte zweite Drehmoment.

Von Vorteil bei dieser Ausführung ist, dass das gesamte Reservoir genutzt wird, um die für das stoßweise Ablassen erforderliche Flüssigkeitsmenge anzusammeln. Es steht also für den Spülvorgang eine relativ große Flüssigkeitsmenge zur Verfügung, ohne dass dadurch die erforderliche Höhendifferenz negativ beeinflusst wird. Das Ventil ermöglicht daher auch eine Nachrüstung bei vorhandenen Systemen, bei denen nur ein geringer Unterschied zwischen dem Zulauf und dem Ablauf gegeben ist. Es ist aber auch dort insgesamt einsetzbar, wo aus einem Reservoir Flüssigkeit nach Erreichen einer bestimmten Füllstandshöhe abgelassen werden soll, um auf ein bestimmtes niedrigeres Niveau heruntergeführt zu werden. Ferner ist das Leitrohr starr ausgeführt, so dass Sedimente leicht ausgespült werden können, ohne das Leitrohr zu verstopfen.

Ferner kann die Sperranordnung mit einem zwischen einer Sperrstellung und einer Lösestellung um eine zweite Schwenkachse schwenkbar am Sperrhebel und mit einem Vorsprung, mit dem der Sperrhebel in seiner Sperrstellung in Wirkverbindung steht und das Leitrohr bis zum Erreichen des zweiten Drehmomentes in der ersten Schaltposition hält, vorgesehen sein. Hierbei kann der Sperrhebel schwenkbar am zweiten Rohrabschnitt angebracht sein.

Von Vorteil bei dieser Ausbildung ist, dass die zur Sperranordnung gehörenden Mittel außerhalb des mit der Flüssigkeit in Verbindung tretenden Bereiches angeordnet sind. Dies wirkt sich insbesondere positiv bei Flüssigkeiten aus, die Schlämme mit sich führen oder Verunreinigungen enthalten.

Eine besonders günstige, das heißt sichere Arbeitsweise wird erzielt, wenn die Sperranordnung zusätzlich einen Schwimmkörper aufweist, der in einer dem zweiten Flüssigkeitsniveau entsprechenden Stellung den Sperrhebel in die Lösestellung überführt. Es kann ein Vorsprung in Form einer Rastnase vorgesehen sein, die am ersten Rohrabschnitt des Leitrohres angebracht ist, mit der der Sperrhebel in seiner Sperrstellung in Wirkverbindung steht und das Leitrohr in der ersten Schaltposition hält. Diese Sperranordnung verhindert indifferente Stellungen des Leitrohres. Dieses wird erst dann in die zweite Schaltposition überführt, wenn auch die gewünschte Flüssigkeitsmenge bevorratet ist, die abgelassen werden soll. Hierzu sind keinerlei Fremdenergie benötigende Steuereinrichtungen erforderlich.

Vorzugsweise sind der Schwimmkörper und der Sperrhebel über Stellmittel miteinander verbunden, die einen geringen Relativweg zwischen beiden zulassen. Da die vom Schwimmkörper erzeugte Stellkraft vom Auftrieb abhängig ist, ist vorgesehen, dass der Relativweg bis zu einer Mitnahme des Sperrhebels einstellbar ist, so dass gewährleistet ist, dass der Flüssigkeitsstand bis auf das gewünschte zweite Flüssigkeitsniveau ansteigt, bevor der Sperrhebel gelöst wird.

In weiterer Ausgestaltung ist vorgesehen, dass die Stellmittel eine mit Gewinde versehene Stellspindel, eine zugehörige und mit dem Schwimmkörper verbundene Stellmutter sowie Verbindungsmittel, die die Stellspindel mit dem Sperrhebel verbinden, umfassen. Als Verbindungsmittel kommt beispielsweise ein Stellmitnehmer in Frage, der auf der Gewindespindel angebracht ist.

Eine vormontierbare Baueinheit des Spülventils kann dadurch erreicht werden, dass der Sperrhebel und das Leitrohr an einem Tragelement schwenkbar gehalten sind, wobei die erste Schwenkachse und die zweite Schwenkachse parallel zueinander verlaufen.

In weiterer Ausgestaltung ist ein Gehäuse vorgesehen, das den ersten Rohrabschnitt des Leitrohres aufnimmt und dem ein Tragelement zugeordnet ist und das mit mindestens einer Einlauföffnung für die Flüssigkeit versehen ist.

Vorzugsweise ist ein Gehäuse vorgesehen, dass das Tragelement und den Schwimmkörper sowie die Stellmittel aufnimmt. Zur Verbindung mit dem Reservoir bzw. mit der in diesem vorgesehenen Flüssigkeit, kann das Gehäuse mit mindestens einer Einlauföffnung versehen sein. Die Verbindung zu dem Reservoir kann mittels Rohren oder Schläuchen erfolgen. Es ist jedoch auch möglich, das Gehäuse unmittelbar im Reservoir anzuordnen. Es kann dafür auch insgesamt mit Durchbrüchen versehen sein, um einen schnellen Eintritt der Flüssigkeit zu erlauben.

In weiterer Ausgestaltung ist vorgeschlagen, dass das Traggestell zwei Ansätze besitzt, dass die Ansätze jeweils eine Gewindebohrung für eine Gewindespindel aufweisen, dass die beiden Gewindespindeln über eine Traverse verbunden sind und dass die Stellfedern einerseits mit der Traverse und andererseits mit dem ersten Rohrabschnitt verbunden ist/sind. Über die Gewindespindel und die Traverse kann die Vorspannung der Stellfeder verändert werden, so dass das gewünschte Flüssigkeitsniveau, bei dem die Umschaltung aus der ersten Schaltposition in die zweite Schaltposition erfolgt, einreguliert werden kann, um den jeweiligen Bedürfnissen bzw. den örtlichen Gegebenheiten gerecht zu werden.

Zur Abdichtung zwischen dem zweiten Rohrabschnitt und dem Lagerelement ist eine Dichtung in Form eines Faltenbalges vorgesehen.

Zur Ableitung der aus dem Leitrohr austretenden Flüssigkeit ist an das Gehäuse über einen Einsatz ein Rohr oder ein , vorzugsweise rohrartiges, Abdeckelement angeschlossen. Dieses ist mit einem Durchbruch versehen, aus dem der zweite Rohrabschnitt in der ersten Schaltposition austritt. In der zweiten Schaltposition liegt das Leitrohr mit seinem zweiten Rohrabschnitt innerhalb des Rohres oder des Rohrabschnitts. Vorzugsweise ist der Vorsprung im Abdeckelement vorgesehen.

Es ist auch möglich, ein Abdeckelement vorzusehen, das das Tragelement hält und unmittelbar an dem Reservoir festgelegt ist. Um den Höhenunterschied einstellen zu können, ist vorgesehen, dass der Vorsprung quer zur zweiten Schwenkachse am Abdeckelement verstellbar angebracht ist. Dabei kann der Sperrhebel zusätzlich über eine Stützfeder gegen den zweiten Rohrabschnitt abgestützt sein, wobei dann durch Verstellen des Vorsprungs die Grundeinstellung der ersten Schaltposition des Leitrohres erfolgt und die Feineinstellung, wann das Leitrohr in seine zweite Schaltposition schwenkt, durch Einstellen der Vorspannung der Stützfeder erfolgt. Die Vorspannung der Stützfeder kann durch eine Stellschraube veränderbar sein. Diese ist vorzugsweise durch einen Durchbruch im Abdeckelement zugänglich. Dabei kann der Durchbruch verschließbar sein. Hierzu kann beispielsweise ein Stopfen benutzt werden.

In Ausgestaltung der Erfindung kann die Sperranordnung eine blattförmige Sperrfeder umfassen, welche zwei Schenkel aufweist, die auf den zweiten Rohrabschnitt seitlich einwirken und das Leitrohr in der ersten Schaltposition halten. Vorzugsweise ist dazu vorgesehen, dass das Leitrohr mit seinem zweiten Rohrabschnitt in einem Abdeckelement angeordnet ist und dass die Sperrfeder unterhalb des zweiten Rohrabschnitts des Leitrohres am Abdeckelement verstellbar angeordnet ist.

Die Bewegungssteuerung des Leitrohres kann durch verschieden gestaltete Steuermittel erfolgen. So können die das erste Drehmoment erzeugenden Steuermittel durch mindestens ein an dem ersten Rohrabschnitt anbringbares Gewicht dargestellt sein. Es ist jedoch auch möglich, dies durch eine gewichtsmäßige Gestaltung des ersten Rohrabschnittes selbst darzustellen. Auch eine Kombination dieser Maßnahmen ist vorgesehen.

Alternativ können die Steuermittel auch durch mindestens eine Stellfeder dargestellt sein, die im Abstand zu der ersten Schwenkachse auf den ersten Rohrabschnitt einwirkt und das erste Drehmoment erzeugt. Dabei ist es möglich, eine Regelung dadurch vorzunehmen, dass die Vorspannung der Stellfeder einstellbar ist.

Ferner soll das Ventil so weiter ausgestaltet werden, dass auch die Steuermittel von der Flüssigkeit in ihrer Funktion nicht beeinträchtigt werden können. Hierzu ist ergänzend vorgesehen, dass die das erste Drehmoment erzeugenden Steuermittel zumindest teilweise durch mindestens eine auf den zweiten Rohrabschnitt einwirkende Stellfeder dargestellt sind.

In Ausgestaltung ist vorgesehen, dass die Vorspannung der Stellfeder einstellbar ist.

Eine besonders günstige Gestaltung ergibt sich, wenn der zweite Rohrabschnitt in einem Abdeckelement angeordnet ist und die Stellfeder einerseits am Abdeckelement und andererseits an einem mit dem zweiten Rohrabschnitt verbundenen Ring befestigt ist.

Ferner soll das Ventil so weiter ausgestaltet werden, dass die Schaltleistung verbessert ist. Darüber hinaus weist der zweite Rohrabschnitt dem ersten Rohrabschnitt entfernt einen Bogenabschnitt auf, der in einer der Einlassöffnung entsprechend ausgerichteten Auslassöffnung endet. Damit kann die Auslassöffnung in der zweiten Schaltposition des Leitrohres horizontal ausgerichtet werden.

Bevorzugte Ausführungsbeispiele eines Ventils und dessen Zuordnung zu einem Flüssigkeitsreservoir sind in den Zeichnungen schematisch dargestellt. Es zeigt
- Figur 1: die Zuordnung eines erfindungsgemäßen Ventils zu einem Flüssigkeitsreservoir,
- Figur 2: einen senkrechten Schnitt durch ein erstes Ausführungsbeispiel eines erfindungsgemäßen Ventils,
- Figur 3: eine Draufsicht zu Figur 2, die teilweise gemäß Schnittlinie III-III von Figur 2 geschnitten ist, wobei jedoch das Leitrohr horizontal ausgerichtet gezeichnet ist,
- Figur 4: einen senkrechten Längsschnitt durch ein zweites Ausführungsbeispiel eines erfindungsgemäßen Ventils,
- Figur 5: eine Detailansicht der Sperranordnung des Ventils gemäß Figur 4,
- Figur 6: einen Querschnitt durch eine alternative Gestaltung der Sperranordnung,
- Figur 7: einen senkrechten Schnitt durch ein drittes Ausführungsbeispiel eines erfindungsgemäßen Ventils,
- Figur 8: eine Draufsicht zu Figur 7,
- Figur 9: einen senkrechten Schnitt durch ein viertes Ausführungsbeispiel eines erfindungsgemäßen Ventils und
- Figur 10: eine Draufsicht zu Figur 9.

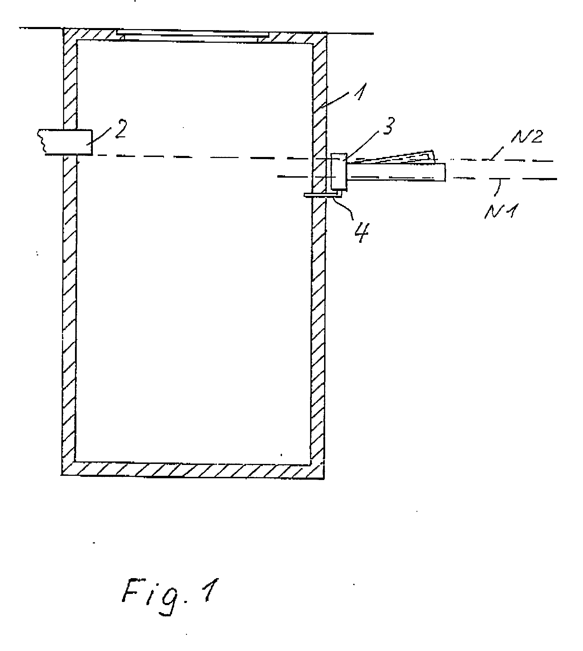

In Figur 1 ist ein Reservoir 1, beispielsweise in Form eines Regenwasserbeckens ersichtlich, das den Zulauf 2 aufweist. Die stoßweise Entleerung erfolgt über das Ventil 3, das über eine Zuleitung 4 mit dem Reservoir 1 verbunden ist. Mittels des Ventils 3 soll Spülflüssigkeit, die das Ventil 3 auf dem Flüssigkeitsniveau N1 verlässt, zunächst bis auf ein zweites Flüssigkeitsniveau N2 angestaut werden. Aus dem Reservoir 1 entweicht bei einer entsprechenden Schaltposition des Ventils 3 eine Flüssigkeitsmenge entsprechend dem Höhenunterschied zwischen dem ersten Flüssigkeitsniveau N1 und dem zweiten Flüssigkeitsniveau N2.

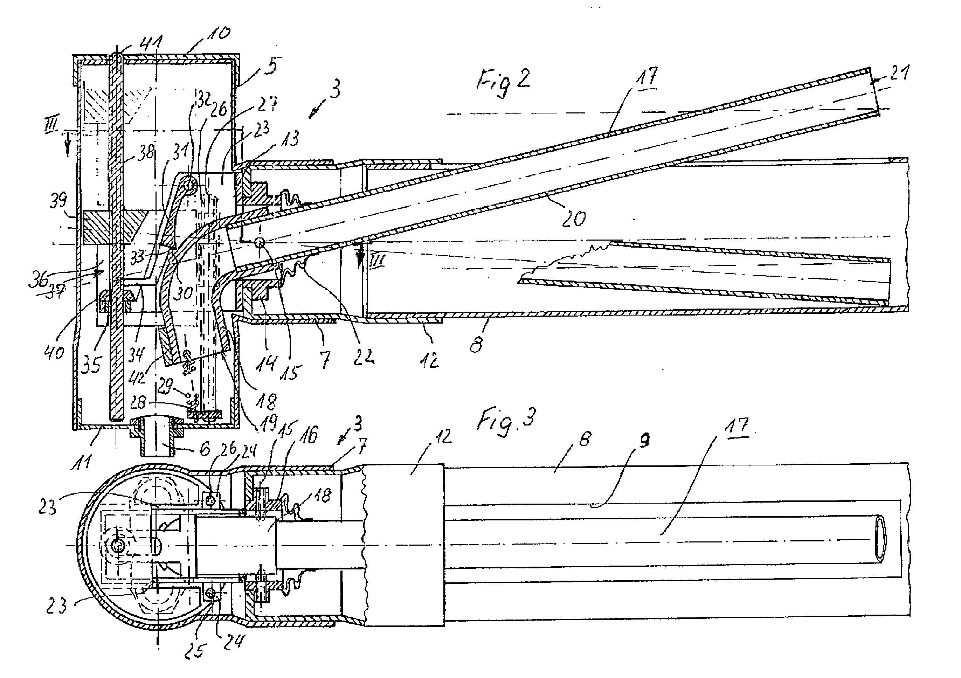

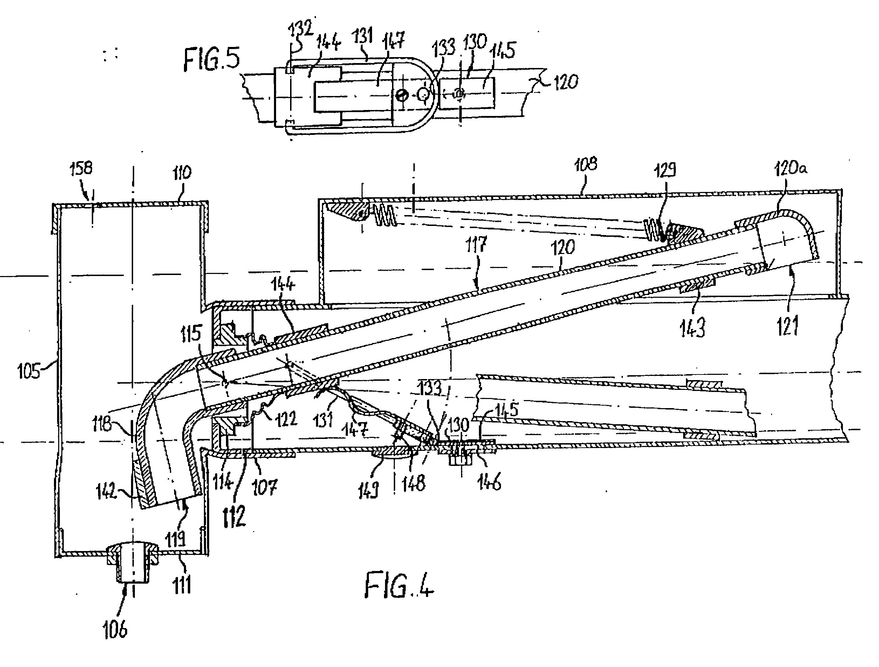

Das in den Figuren 2 und 3 dargestellte Ventil 3 umfasst ein Gehäuse 5 mit einer Einlauföffnung 6 im Boden 11 versehen ist. Das Gehäuse 5 weist einen vertikal verlaufenden rohrförmigen Abschnitt und dazu quer eine Anschlussmuffe 7 auf. An die Anschlussmuffe 7 ist gegebenenfalls unter Zwischenschaltung eines Einsatzes 12 ein Rohr 8 angeschlossen, das sich in Einbaulage im wesentlichen horizontal erstreckt. Dieses weist oben, d.h. zum Deckel 10 des Gehäuses 5 hin einen Durchbruch 9 auf, der sich über einen erheblichen Teil der Länge des Rohres 8 erstreckt. An dem Einsatz 12 sind das Traggestell 13 und ein Lagerelement 14 angeschlossen. Diese können auch ein Teil bilden. Das Lagerelement 14 bildet ein Schwenklager 16 mit der ersten Schwenkachse 15. In diesem Schwenklager 16 ist ein Leitrohr 17 um die erste Schwenkachse 15 schwenkbar gelagert, wobei im eingebauten Zustand die erste Schwenkachse 15 horizontal verläuft. Das Leitrohr 17 umfasst einen ersten Rohrabschnitt 18, welcher die Einlassöffnung 19 aufweist und im Verhältnis zum zweiten Rohrabschnitt 20, der gerade verläuft, abgebogen ist. Der zweite Rohrabschnitt 20 weist die Auslassöffnung 21 auf. Zwischen dem Schwenklager 16 und der Außenfläche des zweiten Rohrabschnittes 20 ist eine Dichtung in Form eines Faltenbalges 22 angeordnet. Das Traggestell 13 umfasst zwei im Abstand zueinander angeordnete Wangen 23, an welchen jeweils außen ein Ansatz 24 angebracht ist. Die beiden Ansätze 24 weisen jeweils eine Gewindebohrung 25 auf. Die beiden Gewindebohrungen 25 nehmen jeweils eine Gewindespindel 26 auf. Ferner sind die beiden Gewindespindeln 26 durch eine Traverse 28 miteinander verbunden. An ihrem Kopf 27 sind die Gewindespindeln 26 jeweils mit einem Stellschlitz zum Angriff eines Schraubendrehers versehen. Die Traverse 28 dient als Stützbasis für eine Stellfeder 29 in Form einer Zugfeder, deren anderes Ende in eine Bohrung des Rohrabschnittes 18 eingehängt ist. Die Vorspannung der Stellfeder 29 ist über die Gewindespindeln 26 einstellbar.

Der erste Rohrabschnitt 18 verläuft gegenüber dem zweite Rohrabschnitt 20 abgebogen nach unten in Richtung zum Boden 11 des Gehäuses 5. In der Zeichnungsfigur 2 sind zwei Schaltpositionen des Leitrohres 17 dargestellt. In der ersten Position ragt der zweite Rohrabschnitt 20 des Leitrohres 17 aus dem Rohr 8 nach außen vor. Es ragt also aus dem Durchbruch 9 heraus. Dabei befindet sich die Auslassöffnung 21 mit ihrer unteren Kante auf einem Flüssigkeitsniveau N2.

An dem ersten Rohrabschnitt 18 ist im Abstand zur ersten Schwenkachse 15 des Schwenklagers 16 eine Rastnase 30 angebracht. Diese Rastnase 30 wirkt mit einem Sperrhebel 31 zusammen, der zwischen den beiden Wangen 23 um eine zweite Schwenkachse 32 schwenkbar gelagert ist und eine Sperrfläche 33 aufweist, die in der Sperrstellung sich vor die Rastnase 30 setzt. Die zweite Schwenkachse 32 verläuft parallel zur ersten Schwenkachse 15. Der Sperrhebel 31 weist einen Gabelansatz 34 auf.

An dem dem Schwenklager 16 entfernten Ende weisen die beiden Wangen 23 eine sie verbindende Traverse auf, in der eine Führungsbohrung 35 vorhanden ist. Durch diese Führungsbohrung 35 ist eine Stellspindel 38 hindurchgesteckt, die mit einem Gewindeabschnitt versehen ist. Am unteren Ende des Gewindeabschnittes ist ein Stellmitnehmer 40 fest angebracht. Dieser ist höhenmäßig zwischen der die Führungsbohrung 35 aufweisenden Traverse und dem darüber liegenden Gabelansatz 34 des Sperrhebels 31 angeordnet. Die beiden Gabelarme des Gabelansatzes 34 umgreifen die Stellspindel 38. Die Stellspindel 38 ist mit einem Schwimmkörper 36 durch eine Stellmutter 39 verbunden. Der Schwimmkörper 36 in Verbindung mit der Stellspindel 38 und der Stellmutter 39 sowie dem Stellmitnehmer 40 bilden die Stellmittel zur Verstellung des Sperrhebels 31. Der Schwimmkörper 36 ist an der Innenwandung des Gehäuses bzw. an den Wangen 23 des Traggestells 13 geführt, so dass dieser sich nicht drehen kann. Die Stellspindel 38 weist einen Kopf 41 mit einem Schlitz für den Eingriff eines Schraubendrehers auf, um einzuregulieren, wann über den Schwimmkörper 36 und die Stellspindel 38 sowie den Stellmitnehmer 40 der Sperrhebel 31 mit seiner Rastfläche 33 außer Eingriff zur Rastnase 30 bewegt wird. In der Ruheposition stützt sich der Schwimmkörper 36 mittels des Stellmitnehmers 40 gegen die Traverse zwischen den beiden Wangen 23 ab. Über die Stellspindel 38, die in der Führungsbohrung 35 und in einer Bohrung des Deckels 10 geführt ist, ist auch der Schwimmkörper 36 vertikal verstellbar geführt.

Die Wirkungsweise des Ventils 3 ist wie folgt:
Das Leitrohr 17 kann zwei Schaltpositionen einnehmen. In der ersten Schaltposition, bei der der zweite Rohrabschnitt 20 aus dem Rohr 8 nach oben austritt, befindet sich der Sperrhebel 31 in der Sperrstellung und der Schwimmkörper 36 in seiner untersten Position, d.h. der Stellmitnehmer 40 stützt sich auf der Traverse zwischen den beiden Wangen 23 des Traggestells 13 ab. Das Leitrohr 17 befindet sich also in einer um die Schwenkachse 15 im linkschwenkenden Sinne verschwenkten Position- Dabei liegt die Umfangskante der Auslassöffnung 21 des zweiten Rohrabschnittes 20 auf einem Niveau, das einem Flüssigkeitsniveau N2 entspricht. Dringt durch die Einlauföffnung 6 Flüssigkeit in das Gehäuse 5 ein, so gelangt diese durch die Einlassöffnung 19 in den ersten Rohrabschnitt 18 und von dort in den zweiten Rohrabschnitt 20. Ist der Auftrieb des Schwimmkörpers 36 aufgrund des erreichten Flüssigkeitsniveaus groß genug, so verstellt der Schwimmkörper 36 über die Stellspindel 38 und den Stellmitnehmer 40 den Sperrhebel 31 aus seiner Sperrstellung in die Lösestellung, wobei der Sperrhebel 31 um die zweite Schwenkachse 32 im rechtsschwenkenden Sinne schwenkt. Dessen Sperrfläche 33 gelangt dabei außer Eingriff zur Rastnase 30 und gibt das Leitrohr 17 frei. Die Länge und der Durchmesser des zweiten Rohrabschnitts 20 und die Zugkraft der Stellfeder 29, die das Leitrohr 17 im linksschwenkenden Sinne beaufschlagt hält und damit ein erstes Drehmoment Md1 erzeugt, sind so aufeinander abgestimmt, dass das von der Flüssigkeitsmenge im zweiten Rohrabschnitt 20 erzeugte Drehmoment Md2 um die erste Schwenkachse 15 größer ist als das Drehmoment Md1 so dass das Leitrohr 17, da es nicht mehr durch den Sperrhebel 31 gehalten ist, im Uhrzeigersinne schwenkt und mit seiner Auslassöffnung 21 in das Rohr 8 eintaucht. Dabei wird die bis auf das Flüssigkeitsniveau N2 angestaute Flüssigkeit im Reservoir 1 auf ein Flüssigkeitsniveau N1 zurückgeführt. Das Flüssigkeitsniveau N1 entspricht dabei minimal dem Flüssigkeitsniveau, das sich einstellt, wenn gerade noch eine Berührung des Umfanges der Einlassöffnung 19 mit dem Flüssigkeitsspiegel im Reservoir 1 bzw. im Gehäuse 5 gegeben ist. Sobald das Flüssigkeitsniveau N1 erreicht ist, wird Luft durch die Einlassöffnung angesaugt und der Flüssigkeitsstrom reißt ab. Ebenso kann aufgrund der Gestaltung des zweiten Rohrabschnitts 20, insbesondere aufgrund der Gestaltung der Auslassöffnung, der Druck im zweiten Rohrabschnitt 20 vor Erreichen des Flüssigkeitsniveaus N1 derart abnehmen, dass Luft durch die Auslassöffnung 21 angesaugt wird und der Flüssigkeitsstrom abgebrochen wird. Der Zeitpunkt des Abbruchs lässt sich durch Variieren der Auslassöffnung, z.B. durch einen drehbaren Stutzen, der die Auslassöffnung bildet, einstellen. Dabei entleert sich der zweite Rohrabschnitt 20 am Ende des Vorganges, so dass die Zugkraft der Stellfeder 29 in Zusammenwirken mit dem aufgrund der Schwerkraft wirksam werdenden Gewicht des Rohrabschnittes 18 das das Leitrohr 17 wieder im linksschwenkenden Sinne verstellt. Das Drehmoment Md1 ist größer als das Drehmoment Md2, da sich keine Flüssigkeit mehr im zweiten Rohrabschnitt 20 befindet. Unabhängig davon nimmt schon nach geringer Absenkung des Flüssigkeitsniveaus der Schwimmkörper 36 wieder seine Ruheposition ein. Der Sperrhebel 31 setzt sich aufgrund der Schwerkraft und gegebenenfalls unter Wirkung einer Feder zur Unterstützung mit seiner Sperrfläche 33 vor die Rastnase 30, wenn das Leitrohr 17 seine erste Schaltposition wieder eingenommen hat. Anstelle der Stellfeder 29 kann auch ausschließlich über Gewichte 42, die an den ersten Rohrabschnitt 28 angeklebt oder sonstwie befestigt werden, das richtige Schaltverhalten eingestellt werden. Es kann aber auch über eine entsprechende Anbringung von Gewichten 42 eine bestimmte Grundeinstellung erzielt werden, so dass über die Stellfeder 29 und die Gewindespindeln 26 nur noch eine geringe Einregulierung erfolgen muss. Es kann dazu eine entsprechend schwache Stellfeder 29 genutzt werden.

Um Flüssigkeit aus tieferen Bereichen des Reservoirs abfließen zu lassen, z.B. wenn im Oberflächenbereich der Flüssigkeit Biomasse schwimmt, kann das Gehäuse 5 nach unten länger als dargestellt ausgeführt werden, so dass die Einlauföffnung tiefer am bzw. im Reservoir angeordnet ist.

Um größere Schaltabstände zwischen N1 und N2 zu beherrschen als durch die Schrägstellung des Leitrohres 17 oder durch die Verlängerung des zweiten Rohrabschnitts konstruktiv möglich ist, können flexible Verlängerungen, z.B. Schläuche, nach unten zeigend jeweils am ersten Rohrabschnitt 18 und am zweiten Rohrabschnitt 20 befestigt sein, die mit ihren Enden die Einlassöffnung 19 bzw. die Auslassöffnung 21 bilden. Bei entsprechender Verlängerung des Gehäuses nach unten und Öffnen des Rohres 8 nach unten, kann je nach Länge der Verlängerungen die Flüssigkeit nach dem Schaltvorgang über größere Höhen gehoben werden, d.h. das Reservoir tiefer entleert werden.

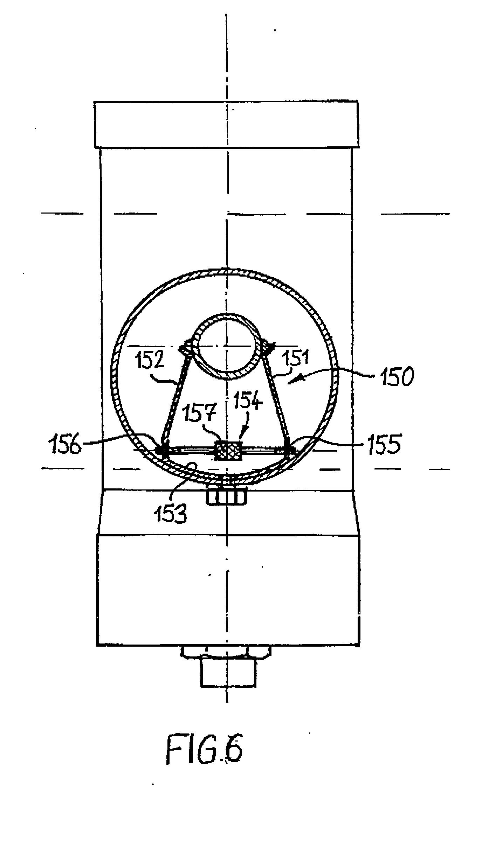

Das in den Figuren 4 und 5 dargestellte Ventil 103 umfasst ein Gehäuse 105 mit einer Einlauföffnung 106 in einem Boden 111 und einer Öffnung 158 zum Ent- und Belüften des Gehäuses 105. Das Gehäuse 105 weist einen vertikal verlaufenden rohrförmigen Abschnitt und dazu quer eine im wesentlichen horizontal verlaufende Anschlussmuffe 107 auf. An die Anschlussmuffe 107 ist ein rohrartiges Abdeckelement 108 angeschlossen, das sich in Einbaulage im wesentlichen horizontal erstreckt. Vor dem Abdeckelement 108 sitzt in der Anschlussmuffe 107 ein Einsatz 112, der ein Lagerelement 114 trägt. Das Lagerelement 114 bildet ein Schwenklager mit der ersten Schwenkachse 115. An dem Lagerelement 114 ist ein Leitrohr 117, gegebenenfalls unter Zwischenschaltung einer Lagerhülse um die erste Schwenkachse 115 schwenkbar gelagert, wobei im eingebauten Zustand die erste Schwenkachse 115 horizontal verläuft. Das Leitrohr 117 umfasst einen ersten Rohrabschnitt 118, welcher die Einlassöffnung 119 aufweist und im Verhältnis zum zweiten Rohrabschnitt 120, der gerade verläuft, abgebogen ist. Der zweite Rohrabschnitt 120 weist an seinem dem ersten Rohrabschnitt 118 entfernten Ende einen Bogenabschnitt 120a auf, der in einer zur Einlassöffnung 119 gleichgerichteten, d.h. nach unten weisenden, Auslassöffnung 121 endet. Zwischen dem Lagerelement 114 und der Außenfläche des zweiten Rohrabschnittes 120 oder der diesen auf eine begrenzte Länge umschließenden Lagerhülse ist eine Dichtung in Form eines Faltenbalges 122 angeordnet

Im Abdeckelement 108 befindet sich oberhalb des zweiten Rohrabschnittes 120 eine Stellfeder 129 in Form einer Zugfeder, deren erstes Ende am Abdeckelement 108 und deren zweites Ende an einem am zweiten Rohrabschnitt 120 nahe zum Bogenabschnitt 120a hin festgelegtes und den zweiten Rohrabschnitt 120 umschließenden Ring 143 befestigt ist. Die Vorspannung der Stellfeder 129 ist durch Verlagerung des Ringes 143 einstellbar.

Der erste Rohrabschnitt 118 verläuft gegenüber dem zweiten Rohrabschnitt 120 abgebogen nach unten in Richtung zum Boden 111 des Gehäuses 105. In der Zeichnung ist das Leitrohr 117 in der ersten Schaltposition dargestellt. Dabei befindet sich die Auslassöffnung 121 mit ihrer unteren Kante auf oder auch um ein bestimmtes Maß oberhalb des Flüssigkeitsniveaus N2.

Mit dem zweiten Rohrabschnitt 120 wirkt eine Sperranordnung zusammen, die einen an einem am zweiten Rohrabschnitt 120 festgelegten Tragring 144 schwenkbar um die zweite Schwenkachse 132 gelagerten Sperrhebel 131 umfasst. Dazu gehört auch ein Vorsprung 130, der mit einem Ende des Sperrhebels 131 reibschlüssig zusammenwirkt, in dem der Sperrhebel 131 sich in der Sperrstellung an einer Sperrkante 133 des Vorsprungs 130 reibschlüssig abstützt. Die zweite Schwenkachse 132 verläuft parallel zur ersten Schwenkachse 115. Der Sperrhebel 131 ist gabelförmig gestaltet. Der Vorsprung 130 ist Teil eines Schiebers 145, der mittels Schrauben in einem Langloch 146 des Abdeckelementes 108 unterhalb des Leitrohres 117 verstellbar gehalten ist.

Ferner ist am Sperrhebel 131 eine blattfederartige Stützfeder 147 befestigt, die sich mit ihrem freien Ende am Leitrohr 117 abstützt. Deren Vorspannung ist über eine Stellschraube 148 verstellbar. Die Stellschraube 148 ist durch einen mittels eines Stopfens 149 verschließbaren Durchbruch im Abdeckelement 108 zugänglich. An dem ersten Rohrabschnitt 118 kann zusätzlich ein Gewicht 142 angeschlossen sein, das die Stellfeder 129 unterstützt. Das Abdeckelement 108 kann auch zusammen mit dem Lagerelement 114 ohne das Gehäuse 105 direkt an das Reservoir 101 angeschlossen werden.

Die Wirkungsweise des Ventils 103 ist wie folgt:
Das Leitrohr 117 kann zwei Schaltpositionen einnehmen. In der ersten Schaltposition, bei der der zweite Rohrabschnitt 120 angehoben ist, befindet sich der Sperrhebel 131 in der Sperrstellung, d.h. in Anlage zur Sperrkante 133 des Vorsprungs 130 und stützt den zweiten Rohrabschnitt 120 in der angehobenen Position ab. Das Leitrohr 117 befindet sich also in einer um die Schwenkachse 115 im linkschwenkenden Sinne verschwenkten Position. Dabei liegt die Umfangskante der Auslassöffnung 121 des zweiten Rohrabschnittes 120 auf einem Niveau, das einem Flüssigkeitsniveau N2 entspricht oder darüber liegt. Tritt durch die Einlassöffnung 106 Flüssigkeit in das Gehäuse 105 ein, so gelangt sie durch die Einlassöffnung 119 in den ersten Rohrabschnitt 118 und von dort in den zweiten Rohrabschnitt 120. Ist das aufgrund des erreichten Flüssigkeitsniveaus im zweiten Rohrabschnitt 120 um die erste Schwenkachse 115 wirkende Drehmoment Md2 groß genug, so dass das vom Gewicht 142 und der Stellfeder 129 erzeugte Moment Md1 so weit überschnitten wird, dass am Sperrhebel 131 eine so große Kraft auf die Sperrkante 133 des Vorsprungs 130 einwirkt, dass die Haltekraft aufgrund Reibung überwunden wird, schwenkt der Sperrhebel 131 um die zweite Schwenkachse 132 im linksschwenkenden Sinne. Er gelangt dabei außer Anlage zum Vorsprung 130 und gibt das Leitrohr 117 frei. Die Länge und der Durchmesser des zweiten Rohrabschnitts 120 und die Zugkraft der Stellfeder 129, die das Leitrohr 117 im linksschwenkenden Sinne beaufschlagt hält und damit ein erstes Drehmoment Md1 erzeugt, sind so aufeinander abgestimmt, dass das von der Flüssigkeitsmenge im zweiten Rohrabschnitt 120 erzeugte Drehmoment Md2 um die erste Schwenkachse 115, wie oben beschrieben, größer ist als das Drehmoment Md1. Folglich schwenkt das Leitrohr 117, da es nicht mehr durch den Sperrhebel 131 und den Vorsprung 130 gehalten ist, im Uhrzeigersinne und nimmt die zweite Stellposition ein. Dabei wird die bis auf das Flüssigkeitsniveau N2 angestaute Flüssigkeit im Reservoir 101 auf ein Flüssigkeitsniveau N1 zurückgeführt. Das Flüssigkeitsniveau N1 entspricht dabei minimal dem Flüssigkeitsniveau, das sich einstellt, wenn gerade noch eine Berührung des Umfanges der Einlassöffnung 119 mit dem Flüssigkeitsspiegel im Reservoir 101 bzw. im Gehäuse 105 gegeben ist. Dabei entleert sich der zweite Rohrabschnitt 120 am Ende des Vorganges, so dass die Zugkraft der Stellfeder 129 in Zusammenwirken mit dem aufgrund der Schwerkraft wirksam werdenden Gewicht des ersten Rohrabschnittes 118 und des Zusatzgewichtes 142, so dass das Leitrohr 17 wieder im linksschwenkenden Sinne verstellt wird. Das Drehmoment Md1 ist größer als das Drehmoment Md2, da sich keine Flüssigkeit mehr im zweiten Rohrabschnitt 120 befindet. Der Sperrhebel 131 gelangt in Anlage zur Sperrkante 133 des Vorsprungs 130, wenn das Leitrohr 117 seine erste Schaltposition wieder eingenommen hat.

Anstelle der Sperranordnung gemäß der Figuren 4 und 5 kann eine solche gemäß Figur 6 vorgesehen sein, bei der der Sperrhebel 131 durch eine Sperrfeder 150 ersetzt ist. Die Sperrfeder 150 weist zwei Schenkel 151, 152 auf, die durch einen Steg 153 verbunden sind. Die Enden der Schenkel 151, 152 legen sich seitlich an den zweiten Rohrabschnitt 120 an und halten diesen zwischen sich. Bei Erreichen des Niveaus N2 wird die Reibkraft zwischen den Schenkeln 151 und 152 und der Außenfläche des zweiten Rohrabschnittes überwunden und dieser gelangt tiefer zwischen die Schenkel 151 und 152 und nähert sich dem Steg 153 an. Die Sperrfeder 150 ist mittels des Steges 153 ähnlich wie der Vorsprung 130 für eine Grundeinstellung axial verstellbar am Abdeckelement 108 gehalten. Ferner ist eine Gewindestange 154 mit einem Linksgewinde und einem Rechtsgewinde vorgesehen, wobei die Enden der Gewindestange 154 mit den unterschiedlichen Gewinden jeweils in eine Gewindebohrung 155, 156 der Schenkel 151, 152 eingeschraubt sind, so dass die Schenkel 151, 152 durch Drehen der Gewindestange 154 mittels eines Rändelelementes 157 zueinander oder voneinander weg bewegt werden können, wodurch die Vorspannung der Sperrfeder 150 einstellbar ist. Nach Erreichen des Niveaus N1 schwenkt das Leitrohr 117 und spreizt dabei die Schenkel 151, 152 unter dem Moment Md1 und gelangt wieder in die dargestellte Sperrposition.

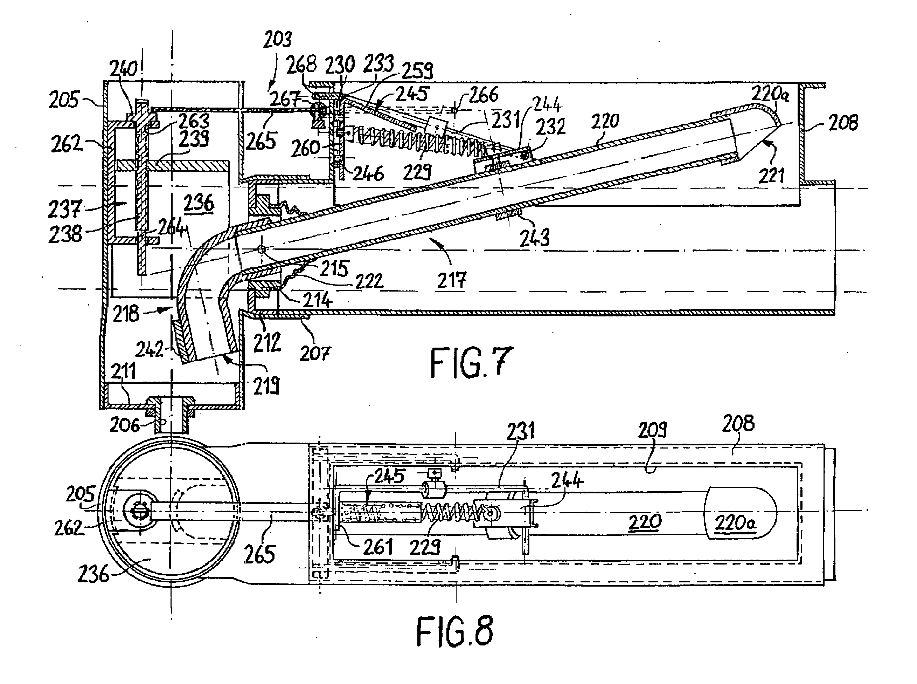

Die Figuren 7 und 8 zeigen ein drittes Ausführungsbeispiel eines Ventils und werden im folgenden zusammen beschrieben. Bauteile, die mit Bauteilen des Ventils gemäß der Figuren 4 und 5 übereinstimmen, sind mit Bezugszeichen versehen, die um den Wert 100 erhöht sind, und bei den Figuren 4 und 5 beschrieben.

Die mit dem zweiten Rohrabschnitt 220 zusammenwirkende Sperranordnung umfasst ein Befestigungselement 244, welches am zweiten Rohrabschnitt 220 befestigt ist. An dem Befestigungselement 244 ist ein Sperrhebel 231 um eine zweite Schwenkachse 232 schwenkbar gelagert. Ferner umfasst die Sperranordnung ein Hakenelement 245, welches einen ersten Schenkel 259 und einen zweiten Schenkel 260 aufweist. Der erste Schenkel 259 und der zweite Schenkel 260 verlaufen abgewinkelt zueinander und bilden eine Sperrkante 233. Der zweite Schenkel 260 ist vertikal ausgerichtet und am Abdeckelement 208 über Schrauben befestigt. Mittels Unterlegscheiben 246 lässt sich der Abstand des zweiten Schenkels 260 zu einer Wandung des Abdeckelements 208 variieren, so dass zwischen dem zweiten Schenkel 260 und der Wandung des Abdeckelements 208 ein Vorsprung in Form eines Schlitzes 230 gebildet ist.

Der Sperrhebel 231 weist einen parallel zur zweiten Schwenkachse 232 verlaufenden Arm 261 auf, welcher in der in Figur 7 dargestellten ersten Schaltposition des Leitrohrs 217 die Sperrkante 233 hintergreift. Somit ist das Leitrohr 217 in der ersten Schaltposition gehalten.

Die Stellfeder 229 ist einerseits am zweiten Rohrabschnitt 220 und andererseits mittelbar über den zweiten Schenkel 260 des Hakenelements 245 mit dem Abdeckelement 208 verbunden.

In dem Gehäuse 205 ist ein Schwimmkörper 236 vertikal verstellbar geführt. Dieser schwimmt kurz vor dem Schaltvorgang auf der Flüssigkeit und nimmt eine vertikale Position ein, die dem Flüssigkeitsniveau entspricht. Die Stellmittel 237 umfassen eine Stellspindel 238, welche in ein Gewinde einer plattenförmigen Stellmutter 239 eingeschraubt ist, wobei die Stellmutter 239 mit dem Schwimmkörper 236 verbunden ist. Die Stellspindel 238 kann somit vertikal gegenüber der Stellmutter 239 eingestellt werden. Die Stellspindel 238 ist vertikal zu einem Haltelement 262 verstellbar geführt. Das Halteelement 262 weist hierbei zwei vertikal übereinander angeordnete Bohrungen 263, 264 auf, in denen die Stellspindel 238 geführt ist. Das Halteelement 262 ist an der Innenwandung des Gehäuses 205 befestigt. Am vertikal oberen Ende weist die Stellspindel 238 einen Stellmitnehmer 240 auf, welcher in einer unteren Position des Schwimmkörpers 236 gegen das Haltelement 262 abgestützt ist und die Stellspindel 238 und somit den Schwimmkörper 236 in der untersten Position hält. Beim Aufschwimmen des Schwimmkörpers 236 wird die Stellspindel 238 vertikal nach oben bewegt bis der Stellmitnehmer 240 gegen einen Stellarm 265 fährt und letzteren anhebt. Der Stellarm 265 ist im Abdeckelement 208 um eine dritte Schwenkachse 266 schwenkbar gelagert. Ferner weist der Stellarm 265 einen Stellansatz 267 auf, der vertikal unter einem Ansatz 268 des Sperrhebels 231 angeordnet ist. Durch das Anheben des Stellarms 265 und dem Verschwenken um die dritte Schwenkachse 266 wird der Stellansatz 267 gegen den Ansatz 268 gedrückt und hebt den Sperrhebel 231 an, bis der Arm 261 des Sperrhebels 231 aus dem Schlitz 230 gehoben ist, und, aufgrund der Gewichtskraft der Flüssigkeit im zweiten Rohrabschnitt 220, das Leitrohr 217 seine zweite Schaltposition einnimmt. Während des Verschwenkens des Leitrohrs 217 gleitet der Arm 261 auf dem ersten Schenkel 259 des Hakenelements 245 ab.

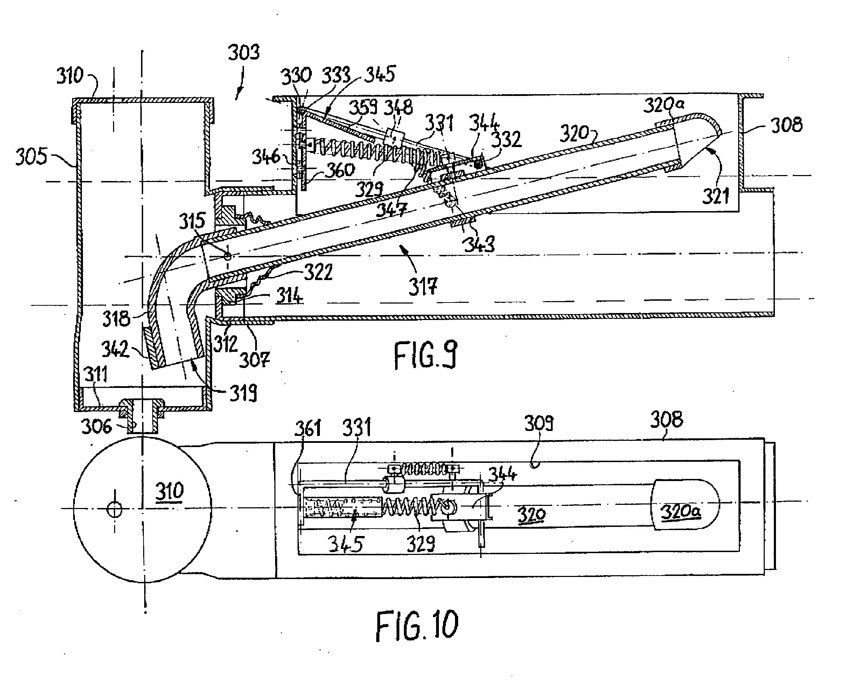

Die Figuren 9 und 10 zeigen eine vierte Ausführungsform eines Ventils, wobei Bauteile, die mit Bauteilen des Ventils gemäß der Figuren 7 und 8 übereinstimmen, mit Bezugszeichen versehen sind, die um den Wert 100 erhöht sind.

Im Gegensatz zu dem Ventil gemäß der Figuren 7 und 8 weist das Ventil gemäß der Figuren 9 und 10 keinen Schwimmkörper auf. Vielmehr ist eine Stützfeder 347 in Form einer Zugfeder vorgesehen, die einerseits am zweiten Rohrabschnitt 320 und am Sperrhebel 331 befestigt ist. Der Anlenkpunkt am Sperrhebel 331 lässt sich durch ein Klemmelement 348 entlang des Sperrhebels 331 verstellen, so dass die Vorspannung der Stützfeder 347 einstellbar ist.

Die Stützfeder 347 sorgt dafür, dass der Arm 361 des Sperrhebels 331 hinter der Sperrkante 333 des Hakenelements 345 gehalten ist. Das Hakenelement 345 ist hierbei in einem Abstand zum Abdeckelement 308 angeordnet, der gewährleistet, dass der Arm 361 lediglich in Reibschluss zur Sperrkante 333 steht. Somit ist gewährleistet, dass bei Überschreiten eines bestimmten Gewichts der Flüssigkeit im zweiten Rohrabschnitt 320 die Reibkraft zwischen dem Arm 361 und der Sperrkante 333 überschritten ist, so dass das Leitrohr 317 in seine zweite Schaltposition überführbar ist.

### Bezugszeichenliste

- 1: Reservoir
- 2: Zulauf
- 3, 103, 203, 303: Ventil
- 4: Zuleitung
- 5, 105, 205, 305: Gehäuse
- 6, 106, 206, 306: Einlauföffnung
- 7, 107, 207, 307: Anschlussmuffe
- 8, 108, 208, 308: Rohr / Abdeckelement
- 9, 209, 309: Durchbruch
- 10, 110, 310: Deckel
- 11, 111, 211, 311: Boden
- 12, 112, 212, 312: Einsatz
- 13: Traggestell
- 14, 114, 214, 314: Lagerelement
- 15, 115, 215, 315: erste Schwenkachse
- 16: Schwenklager
- 17, 117, 217, 317: Leitrohr
- 18, 118, 218, 318: erster Rohrabschnitt
- 19, 119, 219, 319: Einlassöffnung
- 20, 120, 220, 320: zweiter Rohrabschnitt
- 120a, 220a, 320a: Bogenabschnitt
- 21, 121, 221, 321: Auslassöffnung
- 22, 122, 222, 322: Faltenbalg
- 23: Wangen
- 24: Ansatz
- 25: Gewindebohrung
- 26: Gewindespindel
- 27: Kopf
- 28: Traverse
- 29, 129, 229, 329: Stellfeder
- 30, 130, 230, 330: Rastnase / Vorsprung / Schlitz
- 31, 131, 231, 331: Sperrhebel
- 32, 132, 232, 332: zweite Schwenkachse
- 33, 133, 233, 333: Sperrfläche / Sperrkante
- 34: Gabelansatz
- 35: Führungsbohrung
- 36, 136, 236: Schwimmkörper
- 37, 137, 237: Stellmittel
- 38, 138, 238: Stellspindel
- 39, 139, 239: stellmutter
- 40, 140, 240: Stellmitnehmer / Verbindungsmittel
- 41: Kopf
- 42, 142, 242, 342: Gewicht
- 143, 242, 343: Ring
- 144, 244, 344: Tragring / Befestigungselement
- 145, 245, 345: Schieber / Hakenelement
- 146, 246, 346: Langloch / Unterlegscheibe
- 147, 347: Stützfeder
- 148, 348: Stellschraube / Klemmelement
- 149: Stopfen
- 150: Sperrfeder
- 151: Schenkel
- 152: Schenkel
- 153: Steg
- 154: Gewindestange
- 155: Gewindebohrung
- 156: Gewindebohrung
- 157: Rändelelement
- 158: Öffnung
- 259, 359: erster Schenkel
- 260, 360: zweiter Schenkel
- 261, 361: Arm
- 262: Halteelement
- 263: Bohrung
- 264: Bohrung
- 265: Stellarm
- 266: dritte Schwenkachse
- 267: Stellansatz
- 268: Ansatz

## Patentansprüche

1. Ventil (3, 103, 203, 303), insbesondere Spülventil, zum stoßweisen Ablassen von Flüssigkeit aus einem Reservoir (1), das bei einem ersten Flüssigkeitsniveau (N1) im Reservoir (1) eine erste Schaltposition selbsttätig einnimmt, in der es die Flüssigkeit zurückhält und bei einem vorbestimmten zweiten Flüssigkeitsniveau (N2), das höher ist als das erste Flüssigkeitsniveau (N1), selbsttätig eine zweite Schaltposition einnimmt, in der es auf Durchlaß der Flüssigkeit geschaltet ist, umfassend
- ein Leitrohr (17, 117, 217, 317),
das eine Einlaßöffnung (19, 119, 219, 319) und eine Auslaßöffnung (21, 121, 221, 321) aufweist,
das zwischen der Einlaßöffnung (19, 119, 219, 319) und der Auslaßöffnung (21, 121, 221, 321) in einem Schwenklager (16) um eine erste Schwenkachse (15, 115, 215, 315) schwenkbar gelagert ist,
das einen ersten Rohrabschnitt (18, 118, 218, 318), der die Einlaßöffnung (19, 119, 219, 319) besitzt, und einen zweiten Rohrabschnitt (20, 120, 220, 320), der die Auslaßöffnung (21, 121, 221, 321) besitzt, aufweist,
wobei der erste Rohrabschnitt (18, 118, 218, 318) zum zweiten Rohrabschnitt (20, 120, 220, 320) so abgebogen ist, dass die Einlassöffnung (19, 119, 219, 319) in der zweiten Schaltposition des Leitrohres (17, 117, 217, 317) mit ihrem Umfang das erste Flüssigkeitsniveau (N1) berührt und in der ersten Schaltposition die Lage der Auslaßöffnung (21, 121, 221, 321) die Höhe des zweiten Flüssigkeitsniveaus (N2) bestimmt und die Einlaßöffnung (19, 119, 219, 319) unterhalb des ersten Flüssigkeitsniveaus (N1) liegt, und - Steuermittel,
die das Leitrohr (17, 117, 217, 317) zur Einnahme der ersten Schaltposition mit einem ersten Drehmoment (Md1) um die erste Schwenkachse (15, 115, 215, 315) veranlassen, das kleiner ist als das durch die Schwerkraft der in dem zweiten Rohrabschnitt (20, 12, 220, 320) in der ersten Schaltposition aufnehmbaren Flüssigkeitsmenge um die Schwenkachse erzeugte zweite Drehmoment (Md2).

2. Ventil nach Anspruch 1,
ferner umfassend eine Sperranordnung
mit einem zwischen einer Sperrstellung und einer Lösestellung um eine zweite Schwenkachse (32, 132, 232, 332) schwenkbar Sperrhebel (31, 131, 231, 331) und
mit einem Vorsprung (30, 130), mit dem der Sperrhebel (32, 132, 232, 332) in Wirkverbindung steht und das Leitrohr (17, 117, 217, 317) bis zum Erreichen des zweiten Drehmomentes (Md2) in der ersten Schaltposition hält.

3. Ventil nach Anspruch 1,
**dadurch gekennzeichnet,**
**dass** der Sperrhebel (131, 231, 331) am zweiten Rohrabschnitt (120, 220, 320) schwenkbar angebracht ist.

4. Ventil nach Anspruch 2 oder 3,
**dadurch gekennzeichnet,**
**dass** die Sperranordnung einen Schwimmkörper (36, 236) umfaßt, der in einer dem zweiten Flüssigkeitsniveau (N2) entsprechenden Stellung den Sperrhebel (31, 231) in die Lösestellung überführt.

5. Ventil nach Anspruch 4,
**dadurch gekennzeichnet,**
**dass** ein Vorsprung in Form einer Rastnase (30) vorgesehen ist, die am ersten Rohrabschnitt (18) des Leitrohres (17) angebracht ist, mit der der Sperrhebel (31) in seiner Sperrstellung in wirkverbindung steht und das Leitrohr (17) in der ersten Schaltposition hält.

6. Ventil nach Anspruch 5,
**dadurch gekennzeichnet,**
**dass** der Schwimmkörper (36) und der Sperrhebel (31) über Stellmittel (37) miteinander verbunden sind, die eine Relativbewegung zwischen beiden zulassen.

7. Ventil nach Anspruch 6,
**dadurch gekennzeichnet,**
**dass** der Relativweg einstellbar ist.

8. Ventil nach einem der Ansprüche 4 bis 7,
**dadurch gekennzeichnet,**
**dass** die Stellmittel (37) eine mit Gewinde versehene Stellspindel (38), eine zugehörige und mit dem Schwimmkörper (36) verbundene Stellmutter (39) sowie Verbindungsmittel (40), die die Stellspindel (38) mit dem Sperrhebel (31) verbinden, umfassen.

9. Ventil nach einem der Ansprüche 1 bis 8,
**dadurch gekennzeichnet,**
**dass** das Leitrohr (17, 117, 217, 317) an einem Tragelement (14, 114, 214, 314) schwenkbar gehalten ist.

10. Ventil nach einem der Ansprüche 1 bis 9,
**dadurch gekennzeichnet,**
**dass** der Sperrhebel (31) an einem Tragelement (14) schwenkbar gehalten ist.

11. Ventil nach einem der Ansprüche 1 bis 10,
**dadurch gekennzeichnet,**
**dass** ein Gehäuse (5, 105, 205, 305) vorgesehen ist, das den ersten Rohrabschnitt (18, 118, 218, 318) des Leitrohres (17, 117, 217, 317) aufnimmt und dem das Tragelement (14, 114, 214, 314) zugeordnet ist und das mit mindestens einer Einlauföffnung (6, 106, 206, 306) für die Flüssigkeit versehen ist.

12. Ventil nach Anspruch 11,
**dadurch gekennzeichnet,**
**dass** das Gehäuse (5, 205) das Tragelement (14, 214) und den Schwimmkörper (36, 236) sowie die Stellmittel (37, 237) aufnimmt.

13. Ventil nach einem der Ansprüche 9 bis 12,
**dadurch gekennzeichnet,**
**dass** das Tragelement (14) ein Traggestell (13) mit zwei Ansätze (24) besitzt,
**dass** die Ansätze (24) jeweils eine Gewindebohrung (25) für eine Gewindespindel (26) aufweisen, dass die beiden Gewindespindeln (26) über eine Traverse (28) verbunden sind und dass die Stellfeder (29) einerseits mit der Traverse (28) und andererseits mit dem ersten Rohrabschnitt (18) verbunden ist/sind.

14. Ventil nach einem der Ansprüche 9 bis 13,
**dadurch gekennzeichnet,**
**dass** zwischen dem zweiten Rohrabschnitt (20, 120, 220 320) und dem Tragelement (14, 114, 214, 314) eine Dichtung in Form eines Faltenbalgs (22, 122, 222, 322) angeordnet ist.

15. Ventil nach einem der Ansprüche 1 bis 14,
**dadurch gekennzeichnet,**
**dass** an das Gehäuse (5, 105, 205, 305) über einen Einsatz (12, 112, 212, 312) ein Rohr (8) oder ein Abdeckelement (108, 208, 308) angeschlossen ist, in dem der zweite Rohrabschnitt (20) in der zweiten Schaltposition angeordnet ist.

16. Ventil nach den Ansprüchen 15 und 2,
**dadurch gekennzeichnet,**
**dass** in dem Abdeckelement (108, 208, 308) der Vorsprung (130, 230, 330) vorgesehen ist.

17. Ventil nach Anspruch 2,
**dadurch gekennzeichnet,**
**dass** der Vorsprung (130, 230, 330) quer zur zweiten Schwenkachse (132, 232, 332) am Abdeckelement (108, 208, 308) verstellbar angebracht ist.

18. Ventil nach einem der Ansprüche 2 oder 3,
**dadurch gekennzeichnet,**
**dass** der Sperrhebel (131, 331) zusätzlich über eine Stützfeder (147, 347) gegen den zweiten Rohrabschnitt (120, 320) abgestützt ist.

19. Ventil nach Anspruch 18,
**dadurch gekennzeichnet,**
**dass** die Vorspannung der Stützfeder (147, 347) über eine Stellschraube (148) oder ein Klemmelement (348)veränderbar ist.

20. Ventil nach Anspruch 1,
ferner umfassend eine Sperranordnung mit einer blattförmigen Sperrfeder (150), welche zwei Schenkel (151, 152) aufweist, die den zweiten Rohrabschnitt (120) zwischen sich halten und in der ersten Schaltposition stützen.

21. Ventil nach Anspruch 20,
**dadurch gekennzeichnet,**
**dass** das Leitrohr (117) mit seinem zweiten Rohrabschnitt (120) in einem Abdeckelement (108) angeordnet ist und dass die Sperrfeder (150) unterhalb des zweiten Rohrabschnitts (120) des Leitrohres (117) am Abdeckelement (108) verstellbar angeordnet ist.

22. Ventil nach einem der Ansprüche 1 bis 21,
**dadurch gekennzeichnet,**
**dass** die das erste Drehmoment (Md1) erzeugenden Steuermittel zumindest teilweise durch mindestens eine auf den ersten Rohrabschnitt (18, 118, 218, 318) oder auf den zweiten Rohrabschnitt (120, 220, 320) einwirkende Stellfeder (29, 129, 229, 329) dargestellt sind.

23. Ventil nach Anspruch 22,
**dadurch gekennzeichnet,**
**dass** die Vorspannung der Stellfeder (29, 129, 229, 329) einstellbar ist.

24. Ventil nach einem der Ansprüche 1 bis 23,
**dadurch gekennzeichnet,**
**dass** die das erste Drehmoment (Md1) erzeugenden Steuermittel mindestens ein an dem ersten Rohrabschnitt (118, 218, 318) anbringbares Gewicht (142, 242, 342) und/oder die gewichtsmäßige Gestaltung des ersten Rohrabschnitts (118, 218, 318) umfassen.

25. Ventil nach einem der Ansprüche 1 bis 24,
**dadurch gekennzeichnet,**
**dass** der zweite Rohrabschnitt (120, 220, 320) dem ersten Rohrabschnitt (118, 218, 318) entfernt einen Bogenabschnitt (120a, 220a, 320a) aufweist, der in einer der Einlaßöffnung (119, 219, 319) entsprechend ausgerichteten Auslaßöffnung (121, 221, 321) endet.

26. Ventil nach einem der Ansprüche 2 bis 25,
**dadurch gekennzeichnet,**
**dass** die erste Schwenkachse (15, 115, 215, 315) und die zweite Schwenkachse (32, 132, 232, 332) parallel zueinander verlaufen.
